# EUROPEAN PATENT SPECIFICATION

(11) **EP 4 245 048 B1**
(45) Date of publication and mention of the grant of the patent: **28.10.2026**
(21) Application number: 21918625.1
(22) Date of filing: 15.01.2021
(51) Int. Cl.: H04W 4/90, H04W 72/00

(54) **CLIENT DEVICE AND NETWORK NODE FOR EFFICIENT DISASTER HANDLING**
CLIENT-VORRICHTUNG UND NETZWERKKNOTEN ZUR EFFIZIENTEN KATASTROPHENHANDHABUNG
DISPOSITIF CLIENT ET NOEUD DE RÉSEAU DE GESTION EFFICACE DE CATASPTROPHE

(43) Date of publication of application: 20.09.2023
(73) Proprietor: Huawei Technologies Co., Ltd., Shenzhen, Guangdong 518129 (CN)
(72) Inventor: PREMAN, Vishnu, 22369 Lund (CH); MOPIDEVI, Rama Kumar, 22369 Lund (CH); CHEN, Gong, Shenzhen, Guangdong 518129 (CN); SUN, Xibo, Shenzhen, Guangdong 518129 (CN); CUI, Jianhai, Shenzhen, Guangdong 518129 (CN); YANG, Linping, Shenzhen, Guangdong 518129 (CN)
(74) Representative: Maiwald GmbH
(86) International application number: PCT/CN2021/072305
(87) International publication number: WO 2022/151421

(56) References cited:
- WO-A1-2019/122494
- WO-A1-2020/102831
- WO-A1-2020/141964
- WO-A1-2020/141965
- WO-A1-2021/007447
- WO-A1-2021/007447
- CN-A- 103 731 894
- US-A1- 2012 100 848
- "3rd Generation Partnership Project; Technical Specification Group Core Network and Terminals; Study on the support for minimization of service interruption; (Release 17)", 3GPP STANDARD; TECHNICAL REPORT; 3GPP TR 24.811, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V0.1.0, 14 December 2020 (2020-12-14), Mobile Competence Centre ; 650, route des Lucioles ; F-06921 Sophia-Antipolis Cedex ; France , pages 1 - 14, XP051975128

## Description

### Technical Field

The invention relates to a client device and a network node for efficient disaster handling. Furthermore, the invention also relates to corresponding methods and a computer program.

### Background

WO2021/007447A1 describes that an access and mobility management function (AMF) of a first public land mobile network (PLMN) receives status information from a first network function. It is described that the status information comprises a network disaster indication and an identifier of the second PLMN. It is described that the network disaster indication indicates a failure of a second PLMN in a coverage area. Based on the status information, the AMF determines at least one base station of the first PLMN. It is described that the AMF sends a configuration message to the at least one base station. It is described that the configuration message comprises the status information.

WO2020/141964A1 describes a method by which a terminal registers to a network in a wireless communication system. It is described that particularly, the terminal registers to a first public land mobile network (PLMN) through a first base station, receives a disaster-related message indicating that a disaster roaming service is provided, checks, on the basis of the disaster-related message, whether the terminal can receive the disaster roaming service, selects a second PLMN for providing a disaster roaming service if the terminal can receive the disaster roaming service according to the result of checking, transmits a registration request message to the second PLMN selected on the basis of the disaster-related message, and receives a response message for the registration request message from the second PLMN.

During a disaster cellular networks often gets overloaded and users may therefore be denied services. Disasters can be manmade such as e.g. a fire in a building or natural such as e.g. an earth quake. When a disaster happens, a lot of people may try to call emergency services or each other. Due to multiple users requesting services at the same time, the network resources can get congested and users may not be able to get the requested services.

### Summary

An objective of embodiments of the invention is to provide a solution which mitigates or solves the drawbacks and problems of conventional solutions.

The above and further objectives are solved by the subject matter of the independent claims. Further advantageous embodiments of the invention can be found in the dependent claims. Appended claim 1 defines a client device for a communication system. Appended claim 8 defines a network node for a communication system. Appended claim 12 defines a method for a client device. Appended claim 13 defines a method for a network node. Appended claim 14 defines a computer program with a program code. The invention and its scope of protection is defined by these independent claims.

According to a first aspect of the invention, the above mentioned and other objectives are achieved with a client device for a communication system, the client device being configured to be served by a serving Public Land Mobile Network, PLMN, and further being configured to
obtain a PLMN list comprising one or more visiting PLMNs; and
register at a visiting PLMN in the PLMN list upon determining that the serving PLMN is in a disaster condition.

A serving PLMN can be understood to be the PLMN currently serving the client device, i.e. providing communication services to the client device. The serving PLMN can be the home PLMN, which is typically the case when the client device is in its home country. The serving PLMN can further be a PLMN different from the home PLMN, e.g. when the client device is roaming in a different country.

A visiting PLMN can be understood to be a PLMN which the client device can attempt to register with in a disaster condition. A visiting PLMN can further be a PLMN which the client device is not allowed to register with in a normal condition such as a forbidden PLMN, e.g. a PLMN configured in a list of forbidden PLMNs in the client device 100. Each visiting PLMN may be indicated by an identity and may further be associated with a timer defining a minimum wait time before registration.

A disaster condition can be understood to be a condition that a government decides when to initiate and terminate and may be initiated based on a manmade or a natural disaster. When the disaster condition applies, users may have the opportunity to mitigate service interruptions and failures.

An advantage of the client device according to the first aspect is that the client device has information about the PLMN that can be used while in a disaster condition even before the disaster condition has happened. In case of a disaster which affects the serving PLMN, the client device hence knows which PLMN to use and can quickly attempt to register with this PLMN. Thereby, minimizing service interruption when a disaster condition occurs.

In an implementation form of a client device according to the first aspect, obtaining the PLMN list comprises
receive a first control message from a network node, wherein the first control message indicates the PLMN list.

An advantage with this implementation form is that the network node can provide the client device with information about the PLMNs to be used in disaster condition even before the disaster has happened. The network node can thereby control the behaviour of its client devices for a possible future disaster condition.

In an implementation form of a client device according to the first aspect, the first control message is part of a Non-Access Stratum, NAS, protocol.

An advantage with this implementation form is that a standard protocol already used for communication between the network node and the client device can be used, which simplifies the implementation.

In an implementation form of a client device according to the first aspect, the first control message is any of: a configuration update command message, a registration accept message, a registration reject message, a service accept message, a service reject message, and a deregistration request message.

An advantage with this implementation form is that standard messages already used for communication between the network node and the client device can be used, which simplifies the implementation. Furthermore, the PLMN list can be dynamically changed via any of these messages.

In an implementation form of a client device according to the first aspect, obtaining the PLMN list comprises
obtain the PLMN list from a Subscriber Identity Module, SIM, configuration of the client device.

An advantage with this implementation form is that the PLMN list can be pre-configured in the SIM of the client device. Thus, the PLMN list does not have to be signalled to the client device and radio resources can be saved.

In an implementation form of a client device according to the first aspect, obtaining the PLMN list comprises
obtain the PLMN list from a Mobile Equipment, ME, configuration of the client device.

An advantage with this implementation form is that the PLMN list can be pre-configured in the client device. Thus, the PLMN list does not have to be signalled to the client device and radio resources can be saved.

In an implementation form of a client device according to the first aspect, the PLMN list comprises an identity of each visiting PLMN in the PLMN list.

An advantage with this implementation form is that it provides an easy way for the client device to identify the PLMN.

In an implementation form of a client device according to the first aspect, the PLMN list comprises one or more timers, wherein each timer is associated with a visiting PLMN in the PLMN list and defines a start register time instance at the visiting PLMN and/or a re-registration time instance at the serving PLMN.

The timer defining a start register time instance may also be understood as a timer defining a minimum wait time to start registration. The timer defining a re-registration time instance may also be understood as a timer defining a minimum wait time to start re-registration. A minimum wait time can be understood to be the minimum time the client device waits before the client device attempts to register or re-register.

An advantage with this implementation form is that the PLMN list also comprises timer information indicating when the client device can attempt to register with a visiting PLMN in the PLMN list. With the timer information the registration attempts of client devices can controlled such that they do not all attempt to register to a PLMN at the same time. Thereby, preventing overload in that PLMN.

In an implementation form of a client device according to the first aspect, the client device is further configured to
start a timer associated with a visiting PLMN upon camping at the visiting PLMN; and
register at the visiting PLMN when the timer associated with the visiting PLMN expires.

When the timer expires can herein be understood to mean upon expiry of the timer or after the timer has expired.

An advantage with this implementation form is that time of the registration of the client device can be controlled with the PLMN list. The PLMN list can thereby be used to distribute the registration attempts of client devices to a specific PLMN over time, thereby preventing overloading the PLMN during a disaster condition.

In an implementation form of a client device according to the first aspect, the one or more visiting PLMNs in the PLMN list are arranged in a registration priority order for the client device.

This may be understood as that the client device should in some case follow the order of the visiting PLMNs in the PLMN list when trying to register at a visiting PLMN in the PLMN list.

An advantage with this implementation form is that the PLMN list clearly indicate to the client device which PLMN to attempt to register with when the disaster happens. The PLMN list can thereby be used to distribute client devices to different visiting PLMNs.

In an implementation form of a client device according to the first aspect, determining that the serving PLMN is in the disaster condition comprises
receive a second control message from a network node, wherein the second control message indicates that the serving PLMN is in the disaster condition.

An advantage with this implementation form is that the client device will know when to start searching for other PLMNs due to the indication about the disaster condition.

In an implementation form of a client device according to the first aspect, the client device is further configured to
provide an output to a user of the client device, wherein the output indicates that the one or more visiting PLMNs in the PLMN list may be selected for roaming when the serving PLMN is in the disaster condition.

An advantage with this implementation form is that the user is presented with information which allows the user to select an appropriate PLMN when a disaster happens.

In an implementation form of a client device according to the first aspect, register at the visiting PLMN in the PLMN list comprises
transmit a registration request message to the visiting PLMN, wherein the registration request message indicates a registration request for the client device when a previously serving PLMN for the client device is in the disaster condition.

An advantage with this implementation form is that the visiting PLMN knows that the client device is attempting registration on this PLMN as it had to move from another PLMN due to disaster condition. This may help the visiting PLMN to e.g. apply less strict authentication to the client device considering that it is seeking only temporary service from the PLMN.

According to a second aspect of the invention, the above mentioned and other objectives are achieved with a network node for a wireless communication system, the network node being configured to
transmit a control message to a client device, wherein the control message indicates a PLMN list comprising one or more visiting PLMNs for registration by the client device when a serving PLMN for the client device is in a disaster condition.

The network node can be associated with the serving PLMN for the client device which may be understood to mean that the network node is a part of the serving PLMN.

An advantage of the network node according to the second aspect is that the network node can provide the client device with information about the PLMNs to be used in a disaster condition even before the disaster has happened. The network node can thereby control the behaviour of its client devices for a possible future disaster condition.

In an implementation form of a network node according to the second aspect, the network node is an Access and Mobility management Function, AMF, of a core network.

An advantage with this implementation form is that the AMF can provide the client device with information about the PLMNs to be used in a disaster condition even before the disaster has happened. The AMF can thereby control the behaviour of its client devices for a possible future disaster condition.

In an implementation form of a network node according to the second aspect, the control message is part of a NAS protocol.

An advantage with this implementation form is that a standard protocol already used for communication between the network node and the client device can be used, which simplifies the implementation.

In an implementation form of a network node according to the second aspect, the control message is any of: a configuration update command message, a registration accept message, a registration reject message, a service accept message, a service reject message, and a deregistration request message.

An advantage with this implementation form is that standard messages already used for communication between the network node and the client device can be used, which simplifies the implementation. Furthermore, the PLMN list can be dynamically changed via any of these messages.

According to a third aspect of the invention, the above mentioned and other objectives are achieved with a method for a client device being configured to be served by a serving PLMN, the method comprises
obtaining a PLMN list comprising one or more visiting PLMNs; and
registering at a visiting PLMN in the PLMN list upon determining that the serving PLMN is in a disaster condition.

The method according to the third aspect can be extended into implementation forms corresponding to the implementation forms of the client device according to the first aspect. Hence, an implementation form of the method comprises the feature(s) of the corresponding implementation form of the client device.

The advantages of the methods according to the third aspect are the same as those for the corresponding implementation forms of the client device according to the first aspect.

According to a fourth aspect of the invention, the above mentioned and other objectives are achieved with a method for a network node, the method comprises
transmitting a control message to a client device, wherein the control message indicates a PLMN list comprising one or more visiting PLMNs for registration by the client device when a serving PLMN for the client device is in a disaster condition.

The method according to the fourth aspect can be extended into implementation forms corresponding to the implementation forms of the network node according to the second aspect. Hence, an implementation form of the method comprises the feature(s) of the corresponding implementation form of the network node.

The advantages of the methods according to the fourth aspect are the same as those for the corresponding implementation forms of the network node according to the second aspect.

The invention also relates to a computer program, characterized in program code, which when run by at least one processor causes said at least one processor to execute any method according to embodiments of the invention. Further, the invention also relates to a computer program product comprising a computer readable medium and said mentioned computer program, wherein said computer program is included in the computer readable medium, and comprises of one or more from the group: ROM (Read-Only Memory), PROM (Programmable ROM), EPROM (Erasable PROM), Flash memory, EEPROM (Electrically EPROM) and hard disk drive.

Further applications and advantages of the embodiments of the invention will be apparent from the following detailed description.

### Brief Description of the Drawings

The appended drawings are intended to clarify and explain different embodiments of the invention, in which:
- Fig. 1 shows a client device according to an embodiment of the invention;
- Fig. 2 shows a method for a client device according to an embodiment of the invention;
- Fig. 3 shows a network node according to an embodiment of the invention;
- Fig. 4 shows a method for a network node according to an embodiment of the invention;
- Fig. 5 shows a communication system according to an embodiment of the invention;
- Fig. 6 shows a flow chart of a method for a client device according to an embodiment of the invention; and
- Fig. 7 shows signalling from a network node according to an embodiment of the invention.

### Detailed Description

If a public land mobile network (PLMN) is not able to provide services such as e.g. voice calls or mobile data services to a user equipment (UE) due to a disaster condition, there are often other PLMNs available in the area which may be able to provide service to the UE. However, those PLMNs could be configured to be forbidden PLMNs in the UE and the UE will hence never select one of those PLMNs.

To minimization service interruptions, it would be beneficial to enable a UE of a given PLMN to obtain service from another PLMN for an area where a disaster condition applies, even if the other PLMN is a forbidden PLMN for the UE under normal conditions. PLMN selection is a procedure in the UE which enables the UE to select the most appropriate PLMN at a particular point of time. Most of the time when the UE is in the home country, the home PLMN will be the most appropriate PLMN and the home PLMN will thus be the serving PLMN. To prevent the UE from switching from the home PLMN, roaming is often disabled inside the home country. Other PLMNs in the home country may e.g. be added to a list of forbidden PLMNs so that the UE does not roam unnecessarily into these PLMNs.

The invention provides an improved PLMN selection for a UE during disaster conditions. The UE is provided with a list of PLMNs that can be used by the UE when the serving PLMN of the UE is in a disaster condition. With the list of PLMNs for the disaster condition, the UE can be allowed to roam into even forbidden PLMNs during a disaster condition.

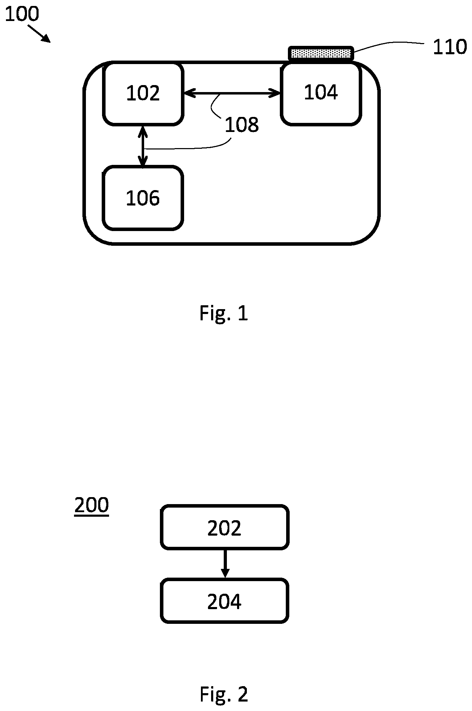

Fig. 1 shows a client device 100 according to an embodiment of the invention. In the embodiment shown in Fig. 1, the client device 100 comprises a processor 102, a transceiver 104 and a memory 106. The processor 102 is coupled to the transceiver 104 and the memory 106 by communication means 108 known in the art. The client device 100 further comprises an antenna or antenna array 110 coupled to the transceiver 104, which means that the client device 100 is configured for wireless communications in a wireless communication system.

That the client device 100 is configured to perform certain actions can in this disclosure be understood to mean that the client device 100 comprises suitable means, such as e.g. the processor 102 and the transceiver 104, configured to perform said actions.

According to embodiments of the invention the client device 100 is configured to be served by a serving PLMN 610 and further is configured to obtain a PLMN list comprising one or more visiting PLMNs 620a, 620b,..., 620n. The client device 100 is further configured to register at a visiting PLMN in the PLMN list upon determining that the serving PLMN 610 is in a disaster condition.

Fig. 2 shows a flow chart of a corresponding method 200 which may be executed in a client device 100, such as the one shown in Fig. 1, configured to be served by a serving PLMN 610. The method 200 comprises obtaining 202 a PLMN list comprising one or more visiting PLMNs 620a, 620b,..., 620n. The method 200 further comprises registering 204 at a visiting PLMN in the PLMN list upon determining that the serving PLMN 610 is in a disaster condition.

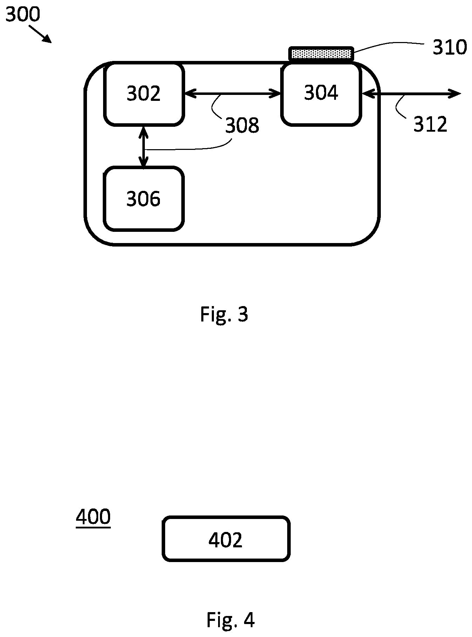

Fig. 3 shows a network node 300 according to an embodiment of the invention. In the embodiment shown in Fig. 3, the network node 300 comprises a processor 302, a transceiver 304 and a memory 306. The processor 302 is coupled to the transceiver 304 and the memory 306 by communication means 308 known in the art. The network node 300 may be configured for both wireless and wired communications in wireless and wired communication systems, respectively. The wireless communication capability is provided with an antenna or antenna array 310 coupled to the transceiver 304, while the wired communication capability is provided with a wired communication interface 312 coupled to the transceiver 304.

That the network node 300 is configured to perform certain actions can in this disclosure be understood to mean that the network node 300 comprises suitable means, such as e.g. the processor 302 and the transceiver 304, configured to perform said actions.

According to embodiments of the invention the network node 300 is configured to transmit a control message 510 to the client device 100. The control message 510 indicates a PLMN list comprising one or more visiting PLMNs 620a, 620b,..., 620n for registration by the client device 100 when a serving PLMN 610 for the client device 100 is in a disaster condition.

Fig. 4 shows a flow chart of a corresponding method 400 which may be executed in a network node 300, such as the one shown in Fig. 3. The method 400 comprises transmitting 402 a control message 510 to a client device 100. The control message 510 indicates a PLMN list comprising one or more visiting PLMNs 620a, 620b,..., 620n for registration by the client device 100 when a serving PLMN 610 for the client device 100 is in a disaster condition.

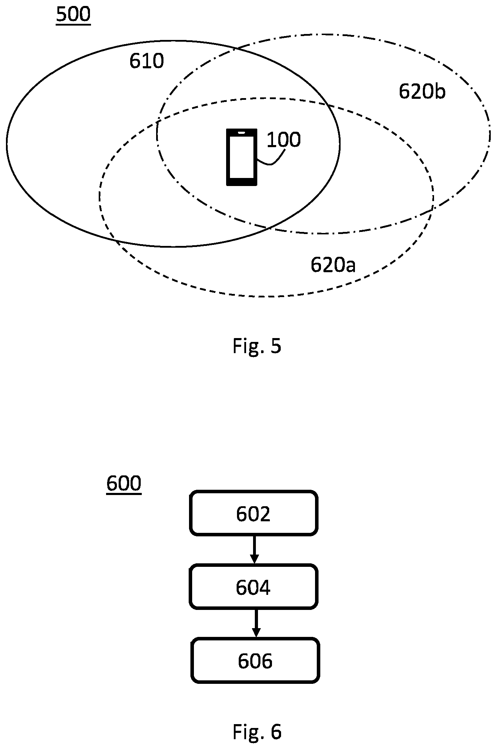

Fig. 5 shows a communication system 500 according to an embodiment of the invention. The communication system 500 comprises the client device 100 and a number of PLMNs 610, 620a, 620b at least partly overlapping each other. The client device 100 is served by a serving PLMN 610. The serving PLMN 610 may be a home PLMN or a visited PLMN. In the home country of the client device 100, the serving PLMN 610 is typically the home PLMN of the client device 100. When the client device 100 is roaming in another country, the serving PLMN 610 is typically a visited PLMN.

A number of additional PLMNs may cover at least partly the same area as the serving PLMN 610, herein referred to as one or more visiting PLMNs 620a, 620b,..., 620n. In the embodiment shown in Fig. 5, a first visiting PLMN 620a and a second visiting PLMN 620b covers the area where the client device 100 is located.

According to embodiments of the invention the client device 100 obtains a PLMN list that can be used by the client device 100 if the serving PLMN 610 goes into a disaster condition, i.e. in case a disaster happens that affects the serving PLMN 610. The PLMN list comprises one or more visiting PLMNs 620a, 620b,..., 620n and upon determining that the serving PLMN 610 is in a disaster condition, the client device 100 can register at one of the visiting PLMNs in the PLMN list. Each visiting PLMN 620n may be associated with a timer defining when the client device 100 can attempt to register to the visiting PLMN 620n, e.g. defining a minimum wait time before registration. Furthermore, the one or more visiting PLMNs 620a, 620b,..., 620n may be arranged in the PLMN list in a registration priority order. Thus, the client device 100 may select a visiting PLMN 620n from the PLMN list based on the order in which they are listed in the PLMN list and further register to the selected visiting PLMN 620n after a timer associated with the visiting PLMN 620n has expired, as will be further explained below with reference to Fig. 6.

With reference to Fig. 5, assume that the client device 100 obtains a PLMN list comprising the first visiting PLMN 620a and the second visiting PLMN 620b. Further assume that the serving PLMN 610 goes into a disaster condition and can no longer provide any communication services to the client device 100, while the first visiting PLMN 620a and/or the second visiting PLMN 620b are operating normally, i.e. are not in a disaster condition. In this case, when the client device 100 determines that the serving PLMN 610 is in a disaster condition, the PLMN list enables the client device 100 to register at the first visiting PLMN 620a or the second visiting PLMN 620b, as will be further described below. Service interruption can thereby be minimized for the client device 100 during a disaster.

Fig. 6 shows a flow chart of a method 600 according to embodiments of the invention. The method 600 may be performed by the client device 100 when served by the serving PLMN 610.

In step 602, the client device 100 obtains a PLMN list comprising one or more visiting PLMNs 620a, 620b,..., 620n. Obtaining the PLMN list may comprise the client device 100 receiving a first control message 510 from a network node 300, where the first control message 510 indicates the PLMN list. The network node 300 can be associated with the serving PLMN 610 which may be understood to mean that the network node 300 is part of the serving PLMN 610, e.g. a function of a core network in the serving PLMN 610. The PLMN list may be explicitly indicated in the control message 510, e.g. comprised in the control message 510 as a new or updated information element (IE). In embodiments, the first control message 510 is part of a non-access stratum (NAS) protocol. The first control message 510 may e.g. be any of: a configuration update command message, a registration accept message, a registration reject message, a service accept message, a service reject message, and a deregistration request message.

Obtaining the PLMN list may further comprise the client device 100 obtaining the PLMN list from at least one of a subscriber identity module (SIM) configuration of the client device 100 and a mobile equipment (ME) configuration of the client device 100. The PLMN list may e.g. be pre-configured in the SIM and/or stored in the ME.

The obtained PLMN list may comprises an identity of each visiting PLMN 620n in the PLMN list. The identity of the visiting PLMN 620n may enable the client device 100 to detect and register with the visiting PLMN 620n. The PLMN list may further comprises one or more timers T1, T2,..., Tn, where each timer Tn is associated with a visiting PLMN 620n in the PLMN list and defines a start register time instance at the visiting PLMN 620n and/or re-registration time instance at the serving PLMN 610. The timer Tn may define a minimum wait time to start registration and/or re-registration, i.e. a minimum time the client device 100 waits before the client device 100 attempts to register at the visiting PLMN 620n or re-register at the previously serving PLMN 610. In this way, the time instance at which the client device 100 registers and/or re-registers can be controlled per visiting PLMN 620n. However, a single timer for all the one or more visiting PLMNs 620a, 620b,..., 620n in the PLMN list may also be used without deviating from the scope of the invention. Thus, the client device 100 may in embodiments use the same minimum wait time for registration to all visiting PLMNs and/or re-registration to the previously serving PLMN 610.

The value of the timer Tn may be based on characteristics of the client device 100 and/or user, e.g. based on priority of the subscriber. For example, the client device of a high priority subscriber may obtain a PLMN list where the timer Tn per visiting PLMN 620n has a lower value than for a client device of a normal or low priority subscriber. In this way, the client device of the high priority subscriber can attempt to register earlier to the visiting PLMN 620n than the client device of the normal or low priority subscriber.

In embodiments, the one or more visiting PLMNs 620a, 620b,..., 620n in the PLMN list are arranged in a registration priority order for the client device 100. Each visiting PLMN 620n in the PLMN list may hence each be associated with a registration priority and e.g. be listed with the visiting PLMN 620n with the highest registration priority first in the PLMN list. When the client device 100 determines to register with a visiting PLMN 620n from the PLMN list, the client device 100 may select a visiting PLMN 620n from the PLMN list based on the registration priority order and e.g. first attempt to register with the visiting PLMN listed first in the PLMN list.

In step 604, the client device 100 determines that the serving PLMN 610 is in a disaster condition. The client device 100 may determine that the serving PLMN 610 is in a disaster condition based on an indication from the serving PLMN 610 or another PLMN. In embodiments, determining that the serving PLMN 610 is in a disaster condition may comprises the client device 100 receiving a second control message 520 from a network node 300', where the second control message 520 indicates that the serving PLMN 610 is in the disaster condition. The network node 300' transmitting the second control message 520 may be the same or a different network node than the network node 300 transmitting the first control message 510.The network node 300' may e.g. be a base station of a radio access network (RAN) or a function of a core network in the serving PLMN 610 or another PLMN.

The second control message 520 may e.g. be a system information block (SIB) broadcasted by the network node 300'. If the serving PLMN 610 is not responsive, the client device 100 may read a SIB broadcasted from another PLMN and from there obtain an indication that the serving PLMN 610 is in a disaster condition.

Upon determining in step 604 that the serving PLMN 610 is in a disaster condition, the client device 100 register at a visiting PLMN 620n in the PLMN list in step 606. Step 606 may comprise the client device 100 camping on and sending a registration request to the visiting PLMN 620n selected from the PLMN list.

Before attempting to register at the visiting PLMN 620n in the PLMN list, the client device 100 may have performed conventional PLMN selection unsuccessfully. The client device 100 may e.g. have scanned for available PLMNs and only found forbidden PLMNs or found non-forbidden PLMNs but not been able to register with these PLMNs. The client device 100 then performs step 606 and register with a visiting PLMN in the PLMN list.

To indicate that the registration is associated with a disaster condition, the client device 100 may indicate this to the visiting PLMN 620n in the registration request. Thereby, allowing the visiting PLMN 620n to provide special treatment to the client device 100. For example, the visiting PLMN 620n may dilute the authentication requirements as the client device 100 is seeking only temporary service from the visiting PLMN 620n. Step 606 may hence in embodiments comprise the client device 100 transmitting a registration request message to the visiting PLMN 620n, where the registration request message indicates a registration request for the client device 100 when a previously serving PLMN 610 for the client device 100 is in the disaster condition.

The client device 100 may select the visited PLMN 620n from the PLMN list automatically or the visited PLMN 620n may be selected manually by a user of the client device 100. For example, the client device 100 may be operating in an automatic mode in which the client device 100 selects a PLMN automatically or in a manual mode in which a user is responsible for selecting a PLMN from a list of PLMNs presented to the user.

When the client device 100 is operating in the automatic mode, the client device 100 automatically selects a visiting PLMN 620n in the PLMN list upon determining that the serving PLMN 610 is in a disaster condition. The selection may be based on the PLMN list and a PLMN selection procedure while in disaster condition. The PLMN selection procedure may e.g. define that the visiting PLMNs should be selected from the PLMN list in the order in which they are listed in the PLMN list. Thus, the client device 100 may select the first visiting PLMN in the PLMN list and attempt to register to that visiting PLMN. If the registration is not successful, the client device 100 may select and attempt to register to the next visiting PLMN in the PLMN list.

When the PLMN list comprises a timer Tn associated with the selected visiting PLMN 620n which defines a start register time instance, the client device 100 may start the timer Tn associated with the visiting PLMN 620n upon camping at the visiting PLMN 620n and register at the visiting PLMN 620n when the timer Tn associated with the visiting PLMN 620n expires. The client device 100 may register at the visiting PLMN 620n upon expiry of the timer or after expiry of the timer Tn, i.e. once the timer has expired the client device 100 may register at any time. The timer Tn may hence define a minimum wait time, i.e. a minimum time the client device 100 waits before the client device 100 attempts to register at the visiting PLMN 620n. In this way, registration of client devices with the visiting PLMN 620n due to a disaster condition in the serving PLMN 610 can be controlled in time based on the PLMN list.

The timer Tn may further define a re-registration time instance at the serving PLMN 610 and may be used once the disaster condition is over. In a similar way as for the registration, timer Tn may define a minimum wait time, i.e. a minimum time the client device 100 waits before the client device 100 attempts to re-register at the serving PLMN 610. Upon determining that the serving PLMN 610 is no longer in the disaster condition, the client device 100 may re-register with the serving PLMN 610 after the minimum wait time based on the timer Tn. Once the client device 100 camps on the serving PLMN 610, the client device 100 may wait for the timer Tn to perform a registration update procedure towards the serving PLMN 610. This is to make sure that the serving PLMN 610 will not get congested when all its client devices attempt to come back after a disaster condition.

When the client device 100 is operating in the manual mode, the client device 100 may provide an output to a user of the client device 100. The output may indicate that the one or more visiting PLMNs 620a, 620b,..., 620n in the PLMN list may be selected for roaming when the serving PLMN 610 is in the disaster condition. Thus, when the serving PLMN 610 of the client device 100 is in the disaster condition, and the user of the client device 100 initiates a manual PLMN selection, the output according to the invention can be presented to the user. The user is thereby provided with an indication that the one or more visiting PLMNs 620a, 620b,..., 620n supports disaster roaming and can be safely select by the user even if the visiting PLMNs are forbidden PLMNs during normal condition.

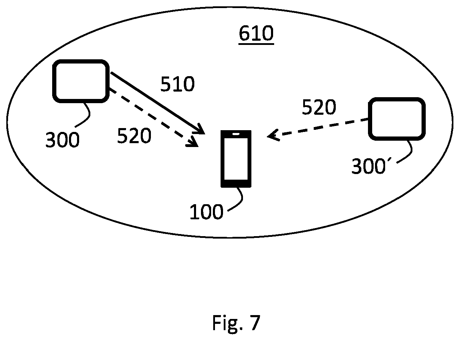

Fig. 7 shows signaling from the network node 300 according to an embodiment of the invention where the network node 300 provides a PLMN list to the client device 100. The network node 300 may e.g. be an access and mobility management function (AMF) of a core network in the serving PLMN 610.

With reference to Fig. 7, the network node 300 transmit a control message 510 to the client device 100. The control message 510 indicates a PLMN list comprising one or more visiting PLMNs 620a, 620b,..., 620n for registration by the client device 100 when the serving PLMN 610 for the client device 100 is in a disaster condition. The control message 510 may be part of a NAS protocol. The control message 510 may e.g. be any of: a configuration update command message, a registration accept message, a registration reject message, a service accept message, a service reject message, and a deregistration request message. For example, the control message 510 may be a new or updated information element (IE) in any of the above-mentioned messages.

As previously described, each visiting PLMN 620n in the PLMN list may be associated with an identity and/or a timer Tn. With the value of timer Tn, the network node 300 can control when the client device 100 attempts to register with a visiting PLMN 620n in the PLMN list during a disaster condition. By providing different values of timer Tn to different client devices for the same visiting PLMN 620n, registration attempts with the visited PLMN 620n may spread out in time such that the visited PLMN 620n is not overloaded when the serving PLMN 610 goes into a disaster condition.

Furthermore, the one or more visiting PLMNs 620a, 620b,..., 620n in the PLMN list may be arranged in a registration priority order for the client device 100. By providing different registration priority order to different client devices, client devices can be distributed over the one or more visiting PLMNs 620a, 620b,..., 620n in the PLMN list such that a single visited PLMN 620n is not overloaded when the serving PLMN 610 goes into a disaster condition. For example, if PLMN B and PLMN C support disaster roaming from PLMN A, PLMN A can configure a first client device with the PLMN list (PLMN B, PLMN C) and a second client device with the PLMN list (PLMN C, PLMN B) so that the first client device will go to PLMN B and the second client device will go to PLMN C if a disaster condition occurs in PLMN A.

If the serving PLMN 610 enters a disaster condition, the network node 300 may transmit a second control message 520 indicating that the serving PLMN 610 is in the disaster condition to the client device 100, as shown in Fig. 7. The second control message 520 may in embodiments instead be transmitted by another network node 300' in the serving PLMN 610 or in another PLMN, i.e. the first control message 510 and the second control message 520 may in embodiments be transmitted to the client device 100 from different network nodes.

The client device 100 herein, may be denoted as a user device, a User Equipment (UE), a mobile station, an internet of things (IoT) device, a sensor device, a wireless terminal and/or a mobile terminal, is enabled to communicate wirelessly in a wireless communication system, sometimes also referred to as a cellular radio system. The UEs may further be referred to as mobile telephones, cellular telephones, computer tablets or laptops with wireless capability. The UEs in this context may be, for example, portable, pocket-storable, hand-held, computer-comprised, or vehicle-mounted mobile devices, enabled to communicate voice and/or data, via the radio access network, with another entity, such as another receiver or a server. The UE can be a Station (STA), which is any device that contains an IEEE 802.11-conformant Media Access Control (MAC) and Physical Layer (PHY) interface to the Wireless Medium (WM). The UE may also be configured for communication in 3GPP related LTE and LTE-Advanced, in WiMAX and its evolution, and in fifth generation wireless technologies, such as New Radio.

The network node 300, 300' herein may be denoted an access and mobility management function (AMF) of a core network as defined by the 3GPP standard. The AMF may be a function configured for communication in 3GPP fifth generation wireless technologies, such as new radio (NR).

Furthermore, any method according to embodiments of the invention may be implemented in a computer program, having code means, which when run by processing means causes the processing means to execute the steps of the method. The computer program is included in a computer readable medium of a computer program product. The computer readable medium may comprise essentially any memory, such as a ROM (Read-Only Memory), a PROM (Programmable Read-Only Memory), an EPROM (Erasable PROM), a Flash memory, an EEPROM (Electrically Erasable PROM), or a hard disk drive.

Moreover, it is realized by the skilled person that embodiments of the client device 100 and the network node 300 comprises the necessary communication capabilities in the form of e.g., functions, means, units, elements, etc., for performing the solution. Examples of other such means, units, elements and functions are: processors, memory, buffers, control logic, encoders, decoders, rate matchers, de-rate matchers, mapping units, multipliers, decision units, selecting units, switches, interleavers, de-interleavers, modulators, demodulators, inputs, outputs, antennas, amplifiers, receiver units, transmitter units, DSPs, MSDs, TCM encoder, TCM decoder, power supply units, power feeders, communication interfaces, communication protocols, etc. which are suitably arranged together for performing the solution.

Especially, the processor(s) of the client device 100 and the network node 300 may comprise, e.g., one or more instances of a Central Processing Unit (CPU), a processing unit, a processing circuit, a processor, an Application Specific Integrated Circuit (ASIC), a microprocessor, or other processing logic that may interpret and execute instructions. The expression "processor" may thus represent a processing circuitry comprising a plurality of processing circuits, such as, e.g., any, some or all of the ones mentioned above. The processing circuitry may further perform data processing functions for inputting, outputting, and processing of data comprising data buffering and device control functions, such as call processing control, user interface control, or the like.

Finally, it should be understood that the invention is not limited to the embodiments described above, but also relates to and incorporates all embodiments within the scope of the appended independent claims.

## Claims

1. A client device (100) for a communication system (500), the client device (100) being configured to be served by a serving Public Land Mobile Network, PLMN, (610) and further being configured to
obtain a PLMN list comprising one or more visiting PLMNs (620a, 620b,..., 620n), ; and
register at a visiting PLMN in the PLMN list upon determining that the serving PLMN (610) is in a disaster condition; and
wherein the PLMN list comprises one or more timers, T1, T2, ..., Tn, wherein each timer, Tn, is associated with a visiting PLMN (620n) in the PLMN list and defines a start register time instance at the visiting PLMN (620n) that defines a minimum time the client device waits before the client device attempts to register and/or a re-registration time instance at the serving PLMN (610) that defines minimum time the client device waits before the client device attempts to register.

2. The client device (100) according to claim 1, wherein obtaining the PLMN list comprises
receive a first control message (510) from a network node (300), wherein the first control message (510) indicates the PLMN list.

3. The client device (100) according to claim 2, wherein the first control message (510) is part of a Non-Access Stratum, NAS, protocol.

4. The client device (100) according to claim 3, wherein the first control message (510) is any of: a configuration update command message, a registration accept message, a registration reject message, a service accept message, a service reject message, and a deregistration request message.

5. The client device (100) according to any one of the preceding claims, wherein obtaining the PLMN list comprises
obtain the PLMN list from a Subscriber Identity Module, SIM, configuration of the client device (100).

6. The client device (100) according to any one of the preceding claims, wherein obtaining the PLMN list comprises
obtain the PLMN list from a Mobile Equipment, ME, configuration of the client device (100).

7. The client device (100) according to any one of the preceding claims, wherein the PLMN list comprises an identity of each visiting PLMN (620n) in the PLMN list.

8. A network node (300) for a communication system (500), the network node (300) being configured to
transmit a control message (510) to a client device (100), wherein the control message (510) indicates a PLMN list comprising one or more visiting PLMNs (620a, 620b,..., 620n) for registration by the client device (100) when a serving PLMN (610) for the client device (100) is in a disaster condition; and
wherein the PLMN list comprises one or more timers, T1, T2, ..., Tn, wherein each timer, Tn, is associated with a visiting PLMN (620n) in the PLMN list and defines a start register time instance at the visiting PLMN (620n) that defines a minimum time the client device waits before the client device attempts to register and/or a re-registration time instance at the serving PLMN (610) that defines minimum time the client device waits before the client device attempts to register.

9. The network node (300) according to claim 8, wherein the network node (300) is an Access and Mobility management Function, AMF, of a core network.

10. The network node (300) according to claim 8 or 9, wherein the control message (510) is part of a NAS protocol.

11. The network node (300) according to claim 10, wherein the control message (510) is any of: a configuration update command message, a registration accept message, a registration reject message, a service accept message, a service reject message, and a deregistration request message.

12. A method (200) for a client device (100) being configured to be served by a serving PLMN (610), the method (200) comprising:
obtaining (202) a PLMN list comprising one or more visiting PLMNs (620a, 620b,..., 620n); and
registering (204) at a visiting PLMN in the PLMN list upon determining that the serving PLMN (610) is in a disaster condition; and
wherein the PLMN list comprises one or more timers, T1, T2, ..., Tn, wherein each timer, Tn, is associated with a visiting PLMN (620n) in the PLMN list and defines a start register time instance at the visiting PLMN (620n) that defines a minimum time the client device waits before the client device attempts to register and/or a re-registration time instance at the serving PLMN (610) that defines minimum time the client device waits before the client device attempts to register.

13. A method (400) for a network node (300), the method (400) comprising:
transmitting (402) a control message (510) to a client device (100), wherein the control message (510) indicates a PLMN list comprising one or more visiting PLMNs (620a, 620b,..., 620n) for registration by the client device (100) when a serving PLMN (610) for the client device (100) is in a disaster condition; and
wherein the PLMN list comprises one or more timers, T1, T2, ..., Tn, wherein each timer, Tn, is associated with a visiting PLMN (620n) in the PLMN list and defines a start register time instance at the visiting PLMN (620n) that defines a minimum time the client device waits before the client device attempts to register and/or a re-registration time instance at the serving PLMN (610) that defines minimum time the client device waits before the client device attempts to register.

14. A computer program with a program code for performing a method according to claim 12 or 13 when the computer program runs on a computer.

## Patentansprüche

1. Client-Vorrichtung (100) für ein Kommunikationssystem (500), wobei die Client-Vorrichtung (100) dazu ausgelegt ist, durch ein "Serving Public Land Mobile Network" bzw. PLMN (610) versorgt zu werden, und ferner zu Folgendem ausgelegt ist:
Erhalten einer PLMN-Liste, die ein oder mehrere "Visiting PLMNs" (620a, 620b,..., 620n) umfasst; und
Registrieren bei einem "Visiting PLMN" in der PLMN-Liste, wenn bestimmt wird, dass sich das "Serving PLMN" (610) in einem Katastrophenzustand befindet; und
wobei die PLMN-Liste einen oder mehrere Timer, T1, T2, ..., Tn, umfasst, wobei jeder Timer, Tn, mit einem "Visiting PLMN" (620n) in der PLMN-Liste assoziiert ist und eine Startregisterzeitinstanz an dem "Visiting PLMN" (620n), die eine Mindestzeit, die die Client-Vorrichtung abwartet, bevor die Client-Vorrichtung versucht, sich zu registrieren, definiert, und/oder eine Neuregistrierungszeitinstanz an dem "Serving PLMN" (610), die eine Mindestzeit, die die Client-Vorrichtung abwartet, bevor die Client-Vorrichtung versucht, sich zu registrieren, definiert, definiert.

2. Client-Vorrichtung (100) nach Anspruch 1, wobei das Erhalten der PLMN-Liste Folgendes umfasst:
Empfangen einer ersten Steuernachricht (510) von einem Netzwerkknoten (300), wobei die erste Steuernachricht (510) die PLMN-Liste angibt.

3. Client-Vorrichtung (100) nach Anspruch 2, wobei die erste Steuernachricht (510) Teil eines "Non-Access-Stratum"- bzw. NAS-Protokolls ist.

4. Client-Vorrichtung (100) nach Anspruch 3, wobei die erste Steuernachricht (510) eines von Folgendem ist: eine Konfigurationsaktualisierungsbefehlsnachricht, eine Registrierungsakzeptanznachricht, eine Registrierungsablehnungsnachricht, eine Dienstakzeptanznachricht, eine Dienstablehnungsnachricht und eine Deregistrierungsanforderungsnachricht.

5. Client-Vorrichtung (100) nach einem der vorhergehenden Ansprüche, wobei das Erhalten der PLMN-Liste Folgendes umfasst:
Erhalten der PLMN-Liste von einer "Subscriber-Identity-Module"- bzw. SIM-Konfiguration der Client-Vorrichtung (100).

6. Client-Vorrichtung (100) nach einem der vorhergehenden Ansprüche, wobei das Erhalten der PLMN-Liste Folgendes umfasst:
Erhalten der PLMN-Liste von einer "Mobile-Equipment"- bzw. ME-Konfiguration der Client-Vorrichtung (100).

7. Client-Vorrichtung (100) nach einem der vorhergehenden Ansprüche, wobei die PLMN-Liste eine Identität jedes "Visiting PLMN" (620n) in der PLMN-Liste umfasst.

8. Netzwerkknoten (300) für ein Kommunikationssystem (500), wobei der Netzwerkknoten (300) zu Folgendem ausgelegt ist:
Übertragen einer Steuernachricht (510) an eine Client-Vorrichtung (100), wobei die Steuernachricht (510) eine PLMN-Liste angibt, die ein oder mehrere "Visiting PLMNs" (620a, 620b,..., 620n) zur Registrierung durch die Client-Vorrichtung (100) umfasst, wenn sich ein "Serving PLMN" (610) für die Client-Vorrichtung (100) in einem Katastrophenzustand befindet; und
wobei die PLMN-Liste einen oder mehrere Timer, T1, T2, ..., Tn, umfasst, wobei jeder Timer, Tn, mit einem "Visiting PLMN" (620n) in der PLMN-Liste assoziiert ist und eine Startregisterzeitinstanz an dem "Visiting PLMN" (620n), die eine Mindestzeit, die die Client-Vorrichtung abwartet, bevor die Client-Vorrichtung versucht, sich zu registrieren, definiert, und/oder eine Neuregistrierungszeitinstanz an dem "Serving PLMN" (610), die eine Mindestzeit, die die Client-Vorrichtung abwartet, bevor die Client-Vorrichtung versucht, sich zu registrieren, definiert, definiert.

9. Netzwerkknoten (300) nach Anspruch 8, wobei der Netzwerkknoten (300) eine "Access and Mobility Management Function" bzw. AMF eines Kernnetzes ist.

10. Netzwerkknoten (300) nach Anspruch 8 oder 9, wobei die Steuernachricht (510) Teil eines NAS-Protokolls ist.

11. Netzwerkknoten (300) nach Anspruch 10, wobei die Steuernachricht (510) eines von Folgendem ist: eine Konfigurationsaktualisierungsbefehlsnachricht, eine Registrierungsakzeptanznachricht, eine Registrierungsablehnungsnachricht, eine Dienstakzeptanznachricht, eine Dienstablehnungsnachricht und eine Deregistrierungsanforderungsnachricht.

12. Verfahren (200) für eine Client-Vorrichtung (100), die dazu ausgelegt ist, durch ein "Serving PLMN" (610) versorgt zu werden, wobei das Verfahren (200) Folgendes umfasst:
Erhalten (202) einer PLMN-Liste, die ein oder mehrere "Visiting PLMNs" (620a, 620b,..., 620n) umfasst; und
Registrieren (204) bei einem "Visiting PLMN" in der PLMN-Liste, wenn bestimmt wird, dass sich das "Serving PLMN" (610) in einem Katastrophenzustand befindet; und
wobei die PLMN-Liste einen oder mehrere Timer, T1, T2, ..., Tn, umfasst, wobei jeder Timer, Tn, mit einem "Visiting PLMN" (620n) in der PLMN-Liste assoziiert ist und eine Startregisterzeitinstanz an dem "Visiting PLMN" (620n), die eine Mindestzeit, die die Client-Vorrichtung abwartet, bevor die Client-Vorrichtung versucht, sich zu registrieren, definiert, und/oder eine Neuregistrierungszeitinstanz an dem "Serving PLMN" (610), die eine Mindestzeit, die die Client-Vorrichtung abwartet, bevor die Client-Vorrichtung versucht, sich zu registrieren, definiert, definiert.

13. Verfahren (400) für einen Netzwerkknoten (300), wobei das Verfahren (400) Folgendes umfasst:
Übertragen (402) einer Steuernachricht (510) an eine Client-Vorrichtung (100), wobei die Steuernachricht (510) eine PLMN-Liste angibt, die ein oder mehrere "Visiting PLMNs" (620a, 620b,..., 620n) zur Registrierung durch die Client-Vorrichtung (100) umfasst, wenn sich ein "Serving PLMN" (610) für die Client-Vorrichtung (100) in einem Katastrophenzustand befindet; und
wobei die PLMN-Liste einen oder mehrere Timer, T1, T2, ..., Tn, umfasst, wobei jeder Timer, Tn, mit einem "Visiting PLMN" (620n) in der PLMN-Liste assoziiert ist und eine Startregisterzeitinstanz an dem "Visiting PLMN" (620n), die eine Mindestzeit, die die Client-Vorrichtung abwartet, bevor die Client-Vorrichtung versucht, sich zu registrieren, definiert, und/oder eine Neuregistrierungszeitinstanz an dem "Serving PLMN" (610), die eine Mindestzeit, die die Client-Vorrichtung abwartet, bevor die Client-Vorrichtung versucht, sich zu registrieren, definiert, definiert.

14. Computerprogramm mit einem Programmcode zum Durchführen eines Verfahrens nach Anspruch 12 oder 13, wenn das Computerprogramm auf einem Computer ausgeführt wird.

## Revendications

1. Dispositif client (100) destiné à un système de communication (500), le dispositif client (100) étant configuré pour être desservi par un réseau mobile terrestre public de desserte, PLMN (610) et étant en outre configuré pour :
obtenir une liste de PLMN comprenant un ou plusieurs PLMN visités (620a, 620b,..., 620n) ; et
s'enregistrer auprès d'un PLMN visité dans la liste de PLMN après avoir déterminé que le PLMN de desserte (610) est dans une situation de catastrophe ; et
où la liste de PLMN comprend un ou plusieurs temporisateurs T1, T2, ..., Tn, chaque temporisateur Tn étant associé à un PLMN visité (620n) de la liste de PLMN et définissant une échéance de début d'enregistrement auprès du PLMN visité (620n), laquelle définit une durée minimale pendant laquelle le dispositif client attend avant de tenter de s'enregistrer, et/ou une échéance de réenregistrement auprès du PLMN de desserte (610), laquelle définit une durée minimale pendant laquelle le dispositif client attend avant de tenter de s'enregistrer.

2. Dispositif client (100) selon la revendication 1, dans lequel l'obtention de la liste de PLMN comprend l'étape suivante :
recevoir un premier message de commande (510) d'un nœud de réseau (300), le premier message de commande (510) indiquant la liste de PLMN.

3. Dispositif client (100) selon la revendication 2, dans lequel le premier message de commande (510) fait partie d'un protocole NAS (non-Access Stratum).

4. Dispositif client (100) selon la revendication 3, dans lequel le premier message de commande (510) est l'un quelconque parmi : un message de commande de mise à jour de configuration, un message d'acceptation d'enregistrement, un message de rejet d'enregistrement, un message d'acceptation de service, un message de rejet de service, et un message de demande de désenregistrement.

5. Dispositif client (100) selon l'une quelconque des revendications précédentes, dans lequel l'obtention de la liste de PLMN comprend l'étape suivante :
obtenir la liste de PLMN à partir d'une configuration de SIM du dispositif client (100).

6. Dispositif client (100) selon l'une quelconque des revendications précédentes, dans lequel l'obtention de la liste de PLMN comprend l'étape suivante :
obtenir la liste de PLMN à partir d'une configuration d'équipement mobile, ME, du dispositif client (100).

7. Dispositif client (100) selon l'une quelconque des revendications précédentes, dans lequel la liste de PLMN comprend une identité de chaque PLMN visité (620n) dans la liste de PLMN.

8. Nœud de réseau (300) pour un système de communication (500), le nœud de réseau (300) étant configuré pour :
transmettre un message de commande (510) à un dispositif client (100), le message de commande (510) indiquant une liste de PLMN comprenant un ou plusieurs PLMN visités (620a, 620b,..., 620n) pour enregistrement par le dispositif client (100) lorsqu'un PLMN de desserte (610) pour le dispositif client (100) est dans une situation de catastrophe ; et
où la liste de PLMN comprend un ou plusieurs temporisateurs T1, T2, ..., Tn, chaque temporisateur Tn étant associé à un PLMN visité (620n) de la liste de PLMN et définissant une échéance de début d'enregistrement auprès du PLMN visité (620n), laquelle définit une durée minimale pendant laquelle le dispositif client attend avant de tenter de s'enregistrer, et/ou une échéance de réenregistrement auprès du PLMN de desserte (610), laquelle définit une durée minimale pendant laquelle le dispositif client attend avant de tenter de s'enregistrer.

9. Nœud de réseau (300) selon la revendication 8, dans lequel le nœud de réseau (300) est une fonction de gestion d'accès et de mobilité, AMF, d'un réseau central.

10. Nœud de réseau (300) selon la revendication 8 ou la revendication 9, dans lequel le message de commande (510) fait partie d'un protocole NAS.

11. Nœud de réseau (300) selon la revendication 10, dans lequel le message de commande (510) est l'un quelconque parmi : un message de commande de mise à jour de configuration, un message d'acceptation d'enregistrement, un message de rejet d'enregistrement, un message d'acceptation de service, un message de rejet de service, et un message de demande de désenregistrement.

12. Procédé (200) pour un dispositif client (100) configuré pour être servi par un PLMN de desserte (610), le procédé (200) comprenant les étapes suivantes :
obtenir (202) une liste de PLMN comprenant un ou plusieurs PLMN visités (620a, 620b,..., 620n) ; et
s'enregistrer (204) auprès d'un PLMN visité dans la liste de PLMN après avoir déterminé que le PLMN de desserte (610) est dans une situation de catastrophe ; et
où la liste de PLMN comprend un ou plusieurs temporisateurs T1, T2, ..., Tn, chaque temporisateur Tn étant associé à un PLMN visité (620n) de la liste de PLMN et définissant une échéance de début d'enregistrement auprès du PLMN visité (620n), laquelle définit une durée minimale pendant laquelle le dispositif client attend avant de tenter de s'enregistrer, et/ou une échéance de réenregistrement auprès du PLMN de desserte (610), laquelle définit une durée minimale pendant laquelle le dispositif client attend avant de tenter de s'enregistrer.

13. Procédé (400) pour un nœud de réseau (300), le procédé (400) comprenant l'étape suivante :
transmettre (402) un message de commande (510) à un dispositif client (100), le message de commande (510) indiquant une liste de PLMN comprenant un ou plusieurs PLMN visités (620a, 620b,..., 620n) pour enregistrement par le dispositif client (100) lorsqu'un PLMN de desserte (610) pour le dispositif client (100) est dans une situation de catastrophe ; et
où la liste de PLMN comprend un ou plusieurs temporisateurs T1, T2, ..., Tn, chaque temporisateur Tn étant associé à un PLMN visité (620n) de la liste de PLMN et définissant une échéance de début d'enregistrement auprès du PLMN visité (620n), laquelle définit une durée minimale pendant laquelle le dispositif client attend avant de tenter de s'enregistrer, et/ou une échéance de réenregistrement auprès du PLMN de desserte (610), laquelle définit une durée minimale pendant laquelle le dispositif client attend avant de tenter de s'enregistrer.

14. Programme d'ordinateur doté d'un code de programme destiné à réaliser un procédé selon la revendication 12 ou la revendication 13 lorsque le programme d'ordinateur s'exécute sur un ordinateur.
